# NEUE EUROPÄISCHE PATENTSCHRIFT

(11) **EP 1 644 234 B2**
(45) Veröffentlichungstag und Bekanntmachung des Hinweises auf die Entscheidung über den Einspruch: **26.03.2014**
(45) Hinweis auf die Patenterteilung: 04.07.2007
(21) Anmeldenummer: 04737379.0
(22) Anmeldetag: 12.07.2004
(51) Int. Cl.: B61F 5/10, F16F 9/04

(54) **ZENTRIERENDE NOTFEDERABSTÜTZUNG**
EMERGENCY PNEUMATIC SPRING WITH CENTRING ACTION
SUPPORT DE RESSORT DE SECOURS A CENTRAGE

(30) Priorität: 15.07.2003 AT 20031084
(43) Veröffentlichungstag der Anmeldung: 12.04.2006
(73) Patentinhaber: Siemens Transportation Systems GmbH & Co. KG, 1110 Wien (AT)
(72) Erfinder: TEICHMANN, Martin, A-8045 Graz (AT); WALTENSDORFER, Herwig, A-8020 Graz (AT); KIENBERGER, Andreas, A-8020 Graz (AT); HAAS, Herbert, A-8020 Graz (AT); HIRTENLECHNER, Johannes, A-8020 Graz (AT); KÜTER, Christian, A-8046 Graz (AT)
(74) Vertreter: Peham, Alois
(86) Internationale Anmeldenummer: PCT/AT2004/000249
(87) Internationale Veröffentlichungsnummer: WO 2005/005220

(56) Entgegenhaltungen:
- US-A- 3 826 507
- US-A- 3 904 181
- PATENT ABSTRACTS OF JAPAN Bd. 2002, Nr. 11, 6. November 2002 (2002-11-06) -& JP 2002 206582 A (SUMITOMO ELECTRIC IND LTD; KAWASAKI HEAVY IND LTD), 26. Juli 2002 (2002-07-26)

## Beschreibung

Die Erfindung betrifft eine Luftfeder für ein Schienenfahrzeug, welche zwei in einem montierten Zustand über einander angeordnete und über einen Luftbalg miteinander verbundene Balgfelgen aufweist. Die US 3 826 507 A offenbart eine solche Luftfeder.

Weiters betrifft die Erfindung ein Schienenfahrzeug mit einem Drehgestell oder Fahrwerk und einem darüber angeordneten Wagenkasten.

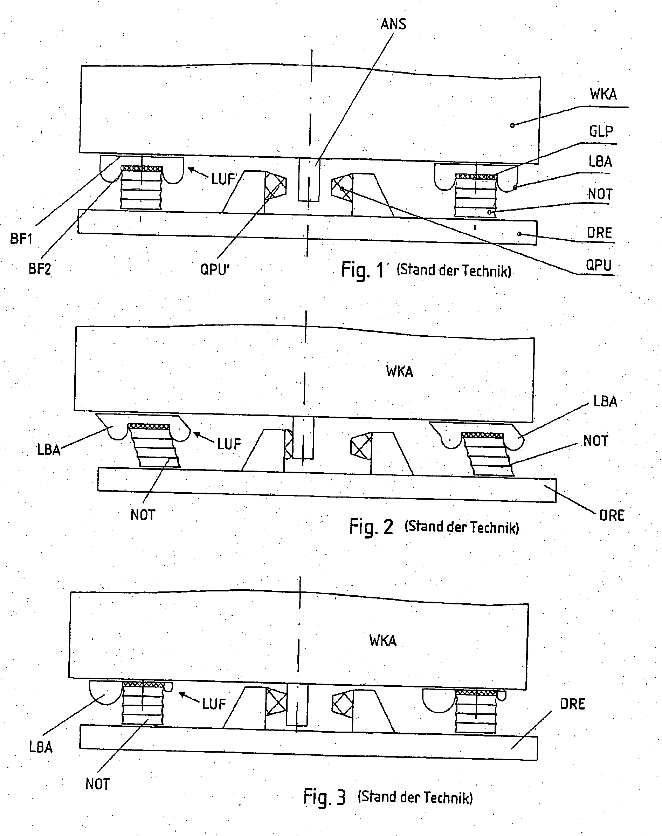

Luftfedern LUF der eingangs genannten Art werden üblicherweise zwischen einem Drehgestell DRE und einem Wagenkasten WKA eines Schienenfahrzeuges SFZ angeordnet. Eine derartige Anordnung bzw. eine Ausführung einer Luftfeder, wie sie Stand der Technik ist, ist beispielsweise in Fig. 1 dargestellt. Natürlich kann die Feder LUF auch mit einem anderen gasförmigen Medium als Luft gefüllt sein. Deshalb wird unter dem Begriff "Luftfeder" in diesem Dokument ganz allgemein eine Gasfeder verstanden.

Die bekannte Luftfeder LUF weist einen Luftbalg LBA auf der zwischen zwei Balgfelgen BF1, BF2 angeordnet ist, die üblicherweise aus Stahl gefertigt sind. Über die Balgfelgen BF1, BF2 ist die Luftfeder LUF mit dem Wagenkasten WKA bzw. mit dem Drehgestell DER verbunden. Üblicherweise ist zwischen der Luftfeder LUF und dem Drehgestell eine Notfeder NOT, beispielsweise eine Gummischichtfeder, vorgesehen, wobei die beiden Balgfelgen BF1, BF2 üblicherweise plattenförmig ausgebildet sind.

In einem Betrieb auftretende Querkräfte werden von der Luftfeder LUF und der Notfeder NOT aufgenommen, wobei eine Querbewegung des Wagenkastens WKA üblicherweise durch mit einem Anschlag ANS zusammenwirkende Querpuffer QPU, QPU' begrenzt ist (Fig. 2).

Bei bekannten Drehgestellkonzepten, welche Luftfedern LUF mit Gleitplatten GLP für den Notbetrieb verwenden, fällt bei Ausfall der Luftfeder LUF deren Quersteifigkeit nahezu vollständig weg, wodurch der Querweg des Wagenkastens WKA in der Hysterese der Gleitreibung undefiniert ist.

Somit können die obere und untere Balgfelge BF1, BF2 innerhalb der Quer- Gleitreibungshysterese jede undefinierte Position zueinander einnehmen (Fig. 3), wodurch sich das Fahrverhalten des Schienenfahrzeuges SFZ verschlechtert bzw. das zulässige Begrenzungsprofil verletzt werden kann.

Es ist daher eine Aufgabe der Erfindung, bei einem Ausfall der Luftfeder die Quer-Reibungshysterese größtmöglich zu minimieren.

Diese Aufgabe wird mit einer Luftfeder der eingangs genannten Art erfindungsgemäß dadurch gelöst, dass eine der Balgfelgen eine Nut und die andere der Balgfelgen ein Gegenstück für die Nut zur selbsständigen Zentrierung in Fahrzeugquerrichtung der beiden Balgfelgen zueinander bei einem Ausfall der Luftfeder aufweist.

Es ist ein Verdienst der Erfindung, eine definierte mittige Position der beiden Balgfelgen zueinander auch bei einem Ausfall der Luftfeder zu gewährleisten, da bei einem Ausfall der Luftfeder und einem dadurch verursachten Absinken der oberen Balgfelge auf die untere Balgfelge das Gegenstück und die Nut miteinander in Eingriff gebracht werden können. Durch das Zusammenwirken der Nut mit ihrem Gegenstück lässt sich die Relativbewegung der beiden Balgfelgen zueinander in Fahrzeugquerrichtung stark einschränken. Bei der erfindungsgemäßen Lösung kann somit mittels der selbst-zentrierenden Nut und ihres Gegenstückes die Reibungshysterese weitegehend eliminiert werden.

In einer bevorzugten Variante der Erfindung ist die Nut an der in einem montierten Zustand über der anderen Balgfelge liegenden Balgfelge angeordnet, wobei für gewisse Luftfedersysteme auch die Ausrichtung der Nut nach unten von Vorteil sein kann.

Weiters kann zumindest eine der Balgfelgen zumindest ein Gleitelement aufweisen.

Vorteilhafterweise weist die Nut einen im Wesentlichen dreieckigen oder trapezförmigen Querschnitt auf, insbesondere sind alle Gleitelemente als ebene Flächen ausgebildet, wodurch ein relativ großflächiger. Kontakt zwischen Gleitfläche und Gegenfläche entsteht, was sich für die Lebensdauer positiv auswirkt.

Weiters können die Nut und das Gegenstück im wesentlichen kongruent zueinander ausgebildet sein.

Darüber hinaus kann die Nut gebogen sein, wobei die Biegung vorteilhafterweise an die Ausdrehbewegung angepasst ist. Das Gegenstück kann kegelförmig prinzipiell aber auch in einer anderen Form ausgebildet sein.

Eine optimierte Zentrierung der beiden Balgfelgen bei einem Ausfall der Luftfeder lässt sich dadurch erzielen, dass der Scheitel der Nut und das Gegenstück im wesentlichen entlang einer Längsmittelebene ihrer je zugeordneten Balgfelge verlaufen.

Weist die Nut einen dreieckigen Querschnitt auf, so sind in einem mittleren Abschnitt der oberen und/oder unteren Balgfelge angeordnete Gleitelemente zur Zentrierung der beiden Balgeflegen bei einem Ausfall der Luftfeder vorgesehen, während an einem seitlichen Abschnitt der oberen und/oder unteren Balgfelge angeordnete Gleitelemente zur Aufnahme vertikaler Belastungen vorgesehen sind.

Weist die Nut hingegen einen trapezförmigen Querschnitt auf, so sind in einem mittleren Abschnitt der oberen und/oder unteren Balgfelge angeordnete Gleitelemente zur Aufnahme vertikaler Belastungen bei einem Ausfall der Luftfeder vorgesehen, während an einem seitlichen Abschnitt der oberen und/ oder unteren Balgfelge angeordnete Gleitelemente zur Zentrierung der beiden Balgfelgen vorgesehen sind.

Die Funktion der Gleitplatten ist somit getrennt in eine tragende und eine zentrierende Rolle. Diese Funktionstrennung erfolgt durch geeignete Wahl der Toleranzen und vermeidet ein unnötiges Klemmen der Zentrier-Gleitplattten.

Die Betriebslebensdauer wird dadurch verlängert, dass die Gleitelemente ebene Gleitflächen aufweisen.

Infolge optimierter Gestaltung der Gleitplatten ist ein zentraler Luftanschluss möglich, ohne dass die Luftanschlussbohrung von der Gleitelementen überfahren werden, wobei die in einem montierten Zustand obere Balgfelge einen zentrisch an ihr angeordneten Luftanschluss aufweist, und die zur Zentrierung der beiden Balgfelgen vorgesehenen Gleitelemente an ihren dem Luftanschluss zugewandten Ecken zur Vermeidung eines Abdeckens der Öffnung vorteilhafter Weise abgeschrägt sein können.

Die oben genannte Aufgabe wird auch mit einem Schienenfahrzeug der eingangs genannten Art erfindungsgemäß dadurch gelöst, dass zwischen dem Drehgestell und dem Wagenkasten zumindest eine Luftfeder nach einem der Ansprüche 1 bis 7 angeordnet ist.

Die Ausrichtung der Nut in Längsrichtung (=Fahrtrichtung) erlaubt ein Gleiten infolge Ausdrehbewegung des Drehgestells bei Bogenfahrt bei gleichzeitiger Aufrechterhaltung der Nut-Querzentrierung.

Die Erfindung samt weiterer Vorteile wird im Folgenden anhand einiger nicht einschränkender Ausführungsbeispiele weiter erläutert, welche in der Zeichnung dargestellt sind. In dieser zeigen schematisch:
Fig. 4 eine Prinzipskizze eines erfindungsgemäßen Schienenfahrzeugs;
Fig. 5 eine teilweise Draufsicht auf eine Balgfelge einer erfindungsgemäßen Luftfeder;
Fig. 6 einen Querschnitt Einer erfindungsgemäßen Luftfeder;
Fig. 7 eine Draufsicht auf eine erfindungsgemäße Luftfeder mit Darstellung der möglichen Betriebszustände;
Fig. 8 eine zweite Variante einer erfindungsgemäßen Luftfeder;
Fig. 9 eine dritte Variante einer erfindungsgemäßen Luftfeder und
Fig. 10 eine vierte Variante einer erfindungsgemäßen Luftfdere.

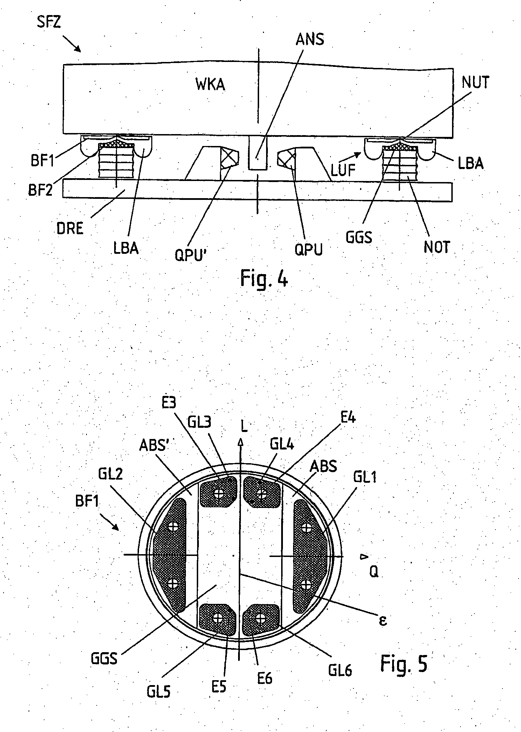

Gemäß Fig. 4 weist ein erfindungsgemäßes Schienenfahrzeug SFZ ein Drehgestell DRE und einen darüber angeordneten Wagenkasten WAK auf. Zwischen dem Wagenkasten WAK und dem Drehgestell ist eine erfindungsgemäße Luftfeder LUF angeordnet, unter der sich eine Notfeder NOT, beispielsweise eine Gummischichtfeder, befindet. Bei einem Ausfall der Luftfeder LUF übernimmt die Notfeder NOT, die Abfederung des Wagenkastens WKA in vertikaler Richtung, während zur Beschränkung der maximalen Querauslenkung ein mittig angeordneter Anschlag ANS vorgesehen sein kann, dessen seitliche Auslenkung von zwei Querpuffern QPU, QPU' begrenzt ist.

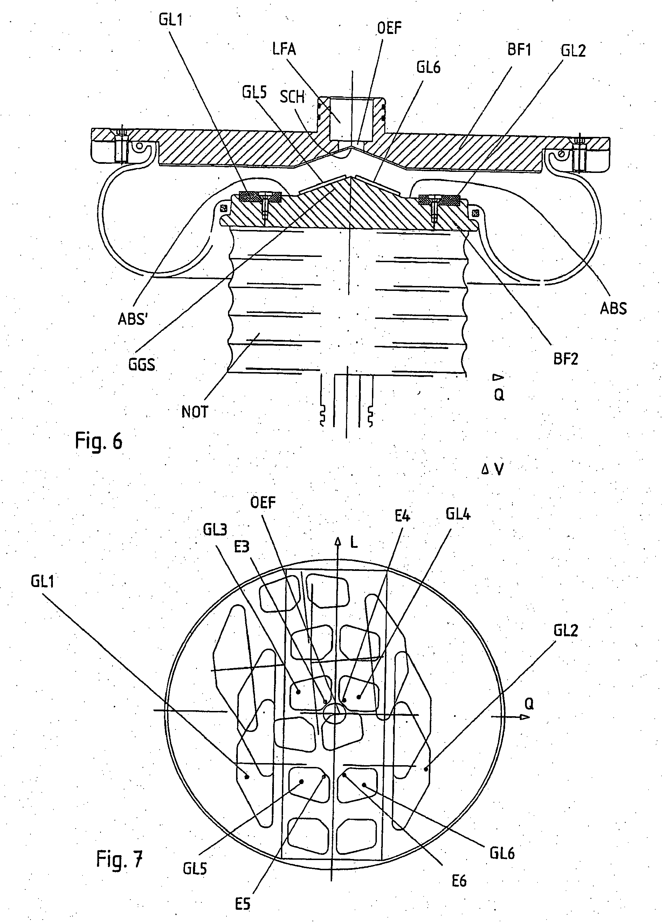

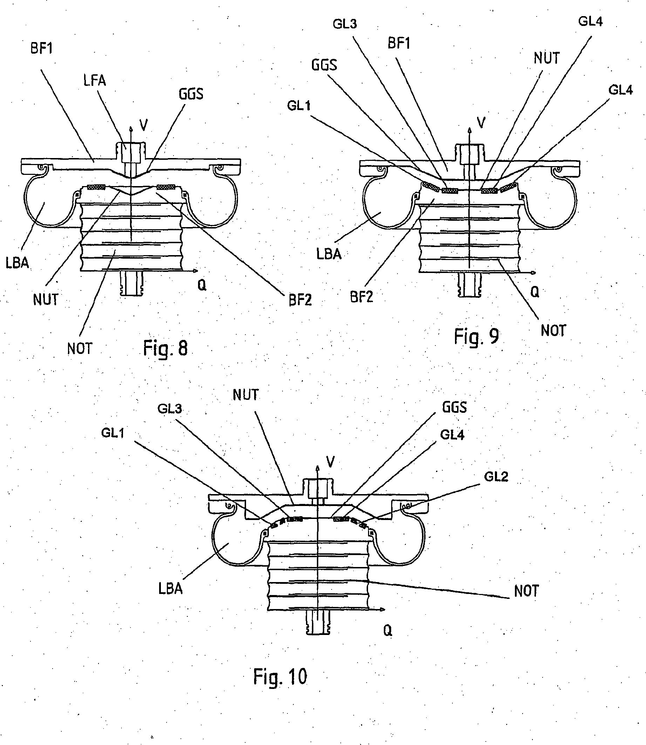

Die erfindungsgemäße Luftfeder LUF weist, wie in Fig. 6, dargestellt zwei einander gegenüberliegende Balgfelgen BF1, BF2 auf, die über einen Luftbalg LBA miteinander verbunden sind. Derartige Luftfedern LUF bzw. Luftfedersysteme sind dem Fachmann in großer Zahl bekannt und sollen daher an dieser Stelle nicht näher erläutert werden. Weiters weist eine der beiden Balgfelgen BF1 eine Nut NUT auf, die bevorzugter weise einen dreieckigen oder trapezförmigen Querschnitt aufweist - siehe auch Fig. 8-10 Die andere Balgfelge BF2 weist ein Gegenstück GGS für die Nut NUT auf, wobei das Gegenstück GGS in einer bevorzugten Ausführungsform der Erfindung kongruent mit der Nut NUT ausgebildet ist. Im Fall einer Nut NUT mit einem dreieckigen Querschnitt ist das Gegenstück GGS somit als Keil ausgebildet. Die Herstellung lässt sich dadurch vereinfachen, dass die Balgfelge BF2 und das Gegenstück GGS einstückig hergestellt sind, wobei jedoch auch eine getrennte Fertigung mit einem späteren Zusammenbau von des Gegenstückes GGS und seiner Balgfelge BF2 prinzipiell möglich ist.

Eine sehr gute Zentrierung der beiden Balgfelgen BF1, BF2 und somit der Luftfeder LUF in einem Ausfall lässt sich dadurch erzielen, dass die Nut NUT und das Gegenstück GGS an ihren Balgfelgen BF1, BF2 so angeordnet sind, dass der Scheitel SCH der Nut NUT und der Scheitel SCH' des Gegenstücks GGS im wesentlichen entlang einer Längsmittelebene ε ihrer je zugeordneten Balgfelge BF1, BF2 verlaufen. Dadurch ist bei Ausfall der Luftfeder ein gutes Ineinandergreifen der Nut NUT und ihres Gegenstückes GGS gewährleistet.

In einem eingebauten Zustand der Luftfeder LUF ist die Nut NUT so angeordnet, dass der Scheitel SCH der Nut NUT im wesentlichen parallel zur Fahrzeuglängsrichtung L verläuft. Durch diese Maßnahme und die Anordnung der Nut NUT an der oberen Balgfelge BF1 lässt sich bei einem Ausfall der Luftfeder, eine sichere Selbstzentrierung der Felgen zueinander erzielen. Prinzipiell sind jedoch auch Ausführungsformen denkbar, in welchen die Nut NUT an der unteren Balgfelge BF2 und das Gegenstück GGS an der oberen Balgfelge BF1 angeordnet ist. Ob die Nut an der oberen oder der unteren Balgfelge angeordnet ist, ist im wesentlichen von der Geometrie des Luftbalges und der Balgfelgen bestimmt.

Eine Längsbewegung der beiden Balgfelgen BF1, BF2 zueinander infolge von Ausdrehungen wird durch Gleiten des Gegenstückes GGS in der Nut NUT ermöglicht. Auftretende Verdrehungen um die Vertikalachse V der Luftfeder LUF und die Querverschiebungen in die mit Q bezeichnete Richtung werden von der Notfeder NOT aufgenommen, wobei die Nut NUT ihre querzentrierte Position beibehält (Fig. 7). Somit herrschen für die Einschränkungsrechung sowohl für den Luftfederbetriebals auch für den Notbetrieb - Ausfall der Luftfeder - sehr ähnliche Bedingungen, was sich für die Gestaltung (Breite) des Wagenkastens WKA, besonders günstig auswirkt.

Darüber hinaus kann durch die keilförmige Formgebung der Nut NUT und des Gegenstückes GGS auch bei einer seitlichen Versetzung der beiden Balgfelgen BF1, BF2 zueinander in einem Schadensfall ein Ineinandergreifen von Nut NUT und Gegenstück GGS gewährleistet werden, da das Gegenstück GGS bei einem Absinken der oberen Balgfelge BF1 von den Seitenwänden der Nut NUT "eingefangen" wird. Somit wird ein selbstständiges Zentrieren der Balgfelgen BF1, BF2 bzw. der Luftfeder LUF in einem Notbetrieb gewährleistet. Insbesondere die Übergangsphase von Luftbetrieb auf den Notbetrieb stellt eine kritische Situation dar, wobei die Nut NUT durch die oben erwähnte keilförmige Ausbildung auf diesen Übergang hin optimiert ist. Somit können sich die beiden Balgfelgen BF1, BF2 bei einem Ausfall der Luftfeder LUF in sämtlichen Betriebszuständen (Querweg, Ausdrehung, Längsweg und Wanken) miteinander selbstständig zentrieren.

Durch die Einschränkung der Beweglichkeit der beiden Balgfelgen BF1, BF2 zueinander in Querrichtung Q wird eine wesentliche Minimierung die Querweg-Gleithysterese bei einem Zusammensacken des Luftbalges LBA erzielt.

Weiters können an dem Gegenstück GGS Gleitplatten GL1, GL2, GL3, GL4 angeordnet sein, wobei gemäß Fig. 5 an jeder Keilflanke je zwei Gleitplatten GL1, GL2, GL3, GL4 angeordnet sein können, die mit den Seitenwänden der Nut NUT zusammenwirken. Die an die Keilflanken angrenzenden Abschnitte ABS, ABS' können ebenfalls Gleitplatten GL1, GL2 aufweisen, wobei über diese Gleitplatten GL1, GL2 die vertikalen Belastungen eingeleitet werden, während die an den Keilflanken angeordneten Gleitplatten GL3, GL4 in erster Linie zur Zentrierung der beiden Balgfelgen BF1, BF2 miteinander dienen. Somit erfolgt eine Funktionstrennung der Gleitplatten GL1, GL2, GL3, GL4 in "Tragen" und "Zentrieren".

Für den Fall, dass die Nut einen trapezförmigen Querschnitt aufweist, sind in dem mittleren Abschnitt angeordnete Gleitelemente GL3, GL4 zur Aufnahme vertikaler Belastungen bei einem Ausfall der Luftfeder LUF vorgesehen, während an einem seitlichen Abschnitt ABS, ABS' angeordnete Gleitelemente GL1, GL2 zur Zentrierung der beiden Balgfelgen BF1, BF2 vorgesehen sind (Fig. 9, 10).

Die in einem montierten Zustand obere Balgfelge BF1 kann einen zentrisch an ihr angeordneten Luftanschluss LFA mit einer Öffnung OEF aufweisen. Durch eine möglichst weit voneinander beabstandete Anordnung der Gleitplatten GL3-GL6 an dem Gegenstück GGS kann der Luftanschluss LFA zentrisch angeordnet werden, wodurch ein Kontakt der Gleitplatten GL3-GL6 mit der Öffnung OEF vermieden werden kann.

Darüber hinaus können die zur Zentrierung der beiden Balgfelgen BF1, BF2 vorgesehenen Gleitelemente GL3, GL4, GL5, GL6 an ihren der Öffnung OEF zugewandten Ecken E3, E4, E5, E6 zur Vermeidung eines Abdeckens der Öffnung OEF vorteilhafter Weise abgeschrägt sein (Fig. 5 und 7).

Zusammenfassend lässt sich sagen, dass durch die Anordnung der Nut NUT und des Gegenstückes GGS an der oberen bzw. der unteren Balgfelge BF1, BF2 bei einem Ausfall der Luftfeder LUF in allen möglichen Betriebszuständen eine zentrierende Wirkung auf diese beiden Bauteile ausgeübt und somit im Ausfall ein klar definierter querzentrierter Zustand der Luftfeder LUF herbeigeführt wird.

## Patentansprüche

1. Luftfeder (LUF) für ein Schienenfahrzeug (SFZ), welche zwei in einem montierten Zustand übereinander angeordnete und über einen Luftbalg (LBA) miteinander verbundene Balgfelgen (BF1, BF2) aufweist, **dadurch gekennzeichnet, dass** eine der Balgfelgen (BF1) eine in Längsrichtung des Schienenfahrzeuges ausgerichtete Nut (NUT) und die andere der Balgfelgen (BF2) ein Gegenstück (GGS) für die Nut zur selbständigen Zentrierung in Fahrzeugquerrichtung (Q) der beiden Balgfelgen (BF1, BF2) zueinander bei einem Ausfall der Luftfeder (LUF) aufweist.

2. Luftfeder nach Anspruch 1, **dadurch gekennzeichnet, dass** die Nut (NUT) an der in einem montierten Zustand über der anderen Balgfelge (BF2) liegenden Balgfelge (BF1) angeordnet ist.

3. Luftfeder nach Anspruch 1, **dadurch gekennzeichnet, dass** die Nut (NUT) an der in einem montierten Zustand unter der anderen Balgfelge (BF1) liegenden Balgfelge (BF2) angeordnet ist.

4. Luftfeder nach einem der Ansprüche 1 bis 3, **dadurch gekennzeichnet, dass** zumindest eine der Balgfelgen (BF1, BF2) zumindest ein Gleitelement (GL1, G12, GL3, GL4) aufweist.

5. Luftfeder nach einem der Ansprüche 1 bis 4, **dadurch gekennzeichnet, dass** die Nut (NUT) einen im Wesentlichen dreieckigen Querschnitt aufweist.

6. Luftfeder nach Anspruch 5, **dadurch gekennzeichnet, dass** in einem mittleren Abschnitt der oberen und/oder unteren Balgfelge (BF1, BF2) angeordnete Gleitelemente (GL3, GL4, GL5, GL6) zur Zentrierung der beiden Balgfelgen (BF1, BF2) bei einem Ausfall der Luftfeder vorgesehen sind, während an einem seitlichen Abschnitt (ABS, ABS') der oberen und/oder unteren Balgfelge angeordnete Gleitelemente (GL1, GL2) zur Aufnahme vertikaler Belastungen vorgesehen sind.

7. Luftfeder nach einem der Ansprüche 1 bis 4, **dadurch gekennzeichnet, dass** die Nut (NUT) einen im Wesentlichen trapezförmigen Querschnitt aufweist.

8. Luftfeder nach Anspruch 7, **dadurch gekennzeichnet, dass** in einem mittleren Abschnitt der oberen und/oder unteren Balgfelge (BF1, BF2) angeordnete Gleitelemente (GL3, GL4, GL5, GL6) zur Aufnahme vertikaler Belastungen bei einem Ausfall der Luftfeder vorgesehen sind, während an einem seitlichen Abschnitt (ABS, ABS') der oberen und/oder unteren Balgfelge angeordnete Gleitelemente (GL1, GL2) zur Zentrierung der beiden Balgfelgen (BF1, BF2) vorgesehen sind.

9. Luftfeder nach einem der Ansprüche 1 bis 8, **dadurch gekennzeichnet, dass** die Nut (NUT) und das Gegenstück (GGS) im wesentlichen kongruent zueinander ausgebildet sind.

10. Luftfeder nach einem der Ansprüche 1 bis 9, **dadurch gekennzeichnet, dass** der Scheitel (SCH) der Nut (NUT) und das Gegenstück (GGS) im wesentlichen entlang einer Längsmittelebene (ε) ihrer je zugeordneten Balgfelge (BF1, BF2) verlaufen.

11. Luftfeder nach Anspruch 4, **dadurch gekennzeichnet, dass** die Gleitelemente (GL1, GL2, GL3, GL4, GL5, GL6) ebene Gleitflächen aufweisen.

12. Luftfeder nach einem der Ansprüche 1 bis 11, **dadurch gekennzeichnet, dass** die Nut (NUT) gebogen ist.

13. Luftfeder nach Anspruch 12, **dadurch gekennzeichnet, dass** die Biegung der Nut (NUT) an die Ausdrehbewegung angepasst ist.

14. Luftfeder nach einem der Ansprüche 1 bis 13, **dadurch gekennzeichnet, dass** das Gegenstück kegelförmig ausgebildet ist.

15. Luftfeder nach einem der Ansprüche 1 bis 14, **dadurch gekennzeichnet, dass** die in einem montierten Zustand obere Balgfelge (BF1) einen zentrisch an ihr angeordneten Luftanschluss (LFA) aufweist.

16. Luftfeder nach Anspruch 4 und Anspruch 15, **dadurch gekennzeichnet, dass** die zur Zentrierung der beiden Balgfelgen (BF1, BF2) vorgesehenen Gleitelemente (GL3, GL4, GL5, GL6) an ihren dem Luftanschluss (LFA) zugewandten Ecken (E3, E4, E5, E6) abgeschrägt sind.

17. Schienenfahrzeug (SFZ) mit einem Drehgestell (DRE) oder Fahrwerk und einem darüber angeordneten Wagenkasten (WAK), **dadurch gekennzeichnet, dass** zwischen dem Drehgestell (DER) und dem Wagenkasten (WAK) zumindest eine Luftfeder (LUF) nach einem der Ansprüche 1 bis 16 angeordnet ist.

18. Schienenfahrzeug nach Anspruch 17, **dadurch gekennzeichnet, dass** der Scheitel (SCH) der Nut (NUT) im wesentlichen parallel zur Fahrzeuglängsrichtung (L) verläuft

## Claims

1. Pneumatic spring (LUF) for a rail vehicle (SFZ), which has two bellows rims (BF1, BF2) arranged in an assembled state one above the other and connected to one another by way of an air bellows (LBA), **characterized in that** one of the bellows rims (BF1) has a groove (NUT) aligned in a longitudinal direction of the rail vehicle and the other of the bellows rims (BF2) has a mating piece (GGS) for the groove (NUT) for independent centring in the transverse direction of the vehicle (Q) of the two bellows rims (BF1, BF2) relative to one another if the pneumatic spring (LUF) fails.

2. Pneumatic spring according to claim 1, **characterised in that** the groove (NUT) is arranged on the bellows rim (BF1) lying in an assembled state above the other bellows rim (BF2).

3. Pneumatic spring according to claim 1, **characterised in that** the groove (NUT) is arranged on the bellows rim (BF2) lying in an assembled state below the other bellows rim (BF1).

4. Pneumatic spring according to one of claims 1 to 3, **characterised in that** at least one of the bellows rims (BF1, BF2) has at least one sliding element (GL1, GL2, GL3, GL4).

5. Pneumatic spring according to one of claims 1 to 4, **characterised in that** the groove (NUT) has an essentially triangular cross-section.

6. Pneumatic spring according to claim 5, **characterised in that** sliding elements (GL3, GL4, GL5, GL6) arranged in a central section of the upper and/or lower bellows rim (BF1, BF2) are provided to centre the two bellows rims (BF1, BF2) if the pneumatic spring fails, while sliding elements (GL1, GL2) arranged on a lateral section (ABS, ABS') of the upper and/or lower bellows rim are provided to receive vertical loads.

7. Pneumatic spring according to one of claims 1 to 4, **characterised in that** the groove (NUT) has an essentially trapezoid-shaped cross-section.

8. Pneumatic spring according to claim 7, **characterised in that** sliding elements (GL3, GL4, GL5, GL6) arranged in a central section of the upper and/or lower bellows rim (BF1, BF2) are provided to receive vertical loads if the pneumatic spring fails, while sliding elements (GL1, GL2) arranged on a lateral section (ABS, ABS') of the upper and/or lower bellows rim are provided to centre the two bellows rims (BF1, BF2).

9. Pneumatic spring according to one of claims 1 to 8, **characterised in that** the groove (NUT) and the mating piece (GGS) are embodied essentially congruent to one another.

10. Pneumatic spring according to one of claims 1 to 9, **characterised in that** the peak (SCH) of the groove (NUT) and the mating piece (GGS) essentially run along a longitudinal centre plane (ε) of their respectively assigned bellows rim (BF1, BF2).

11. Pneumatic spring according to claim 4, **characterised in that** the sliding elements (GL1, GL2, GL3, GL4, GL5, GL6) have flat sliding surfaces.

12. Pneumatic spring according to one of claims 1 to 11, **characterised in that** the groove (NUT) is bent.

13. Pneumatic spring according to claim 12, **characterised in that** the bend in the groove (NUT) is adjusted to the unscrewing motion.

14. Pneumatic spring according to one of claims 1 to 13, **characterised in that** the mating piece is embodied in the shape of a cone.

15. Pneumatic spring according to one of claims 1 to 14, **characterised in that** the upper bellows (BF1) in an assembled state has an air supply (LFA) arranged centrally thereupon.

16. Pneumatic spring according to claim 4 and claim 15, **characterised in that** the sliding elements (GL3, GL4, GL5, GL6) provided to centre the two bellows rims (BF1, BF2) are bevelled at their corners (E3, E4, E5, E6) facing the air supply (LFA).

17. Rail vehicle (SFZ) with a bogie (DRE) or undercarriage and a railcar body (WAK) arranged thereabove, **characterised in that** at least one pneumatic spring (LUF) according to one of claims 1 to 16 is arranged between the bogie (DRE) and the railcar body (WAK).

18. Rail vehicle according to claim 17, **characterised in that** the peak (SCH) of the groove (NUT) runs essentially parallel to the longitudinal direction of the vehicle (L).

## Revendications

1. Ressort pneumatique (LUF) pour un véhicule sur rails (SFZ), lequel comporte deux couronnes de soufflet (BF1, BF2) superposées dans un état monté et reliées entre elles par un soufflet pneumatique (LBA), **caractérisé en ce que** l'une de couronnes de soufflet (BF1) présente une rainure (NUT) orientée dans le sens longitudinal du véhicule sur rails et l'autre des couronnes de soufflet (BF2) comporte une contre-pièce (GGS) pour la rainure en vue du centrage automatique, dans la direction transversale (Q) du véhicule, des deux couronnes de soufflet (BF1, BF2) l'une par rapport à l'autre en cas de défaillance du ressort pneumatique (LUF).

2. Ressort pneumatique selon la revendication 1, **caractérisé en ce que** la rainure (NUT) est agencée sur la couronne de soufflet (BF1) située, dans un état monté, au-dessus de l'autre couronne de soufflet (BF2).

3. Ressort pneumatique selon la revendication 1, **caractérisé en ce que** la rainure (NUT) est agencée sur la couronne de soufflet (BF2) située, dans un état monté, en dessous de l'autre couronne de soufflet (BF1).

4. Ressort pneumatique selon l'une des revendications 1 à 3, **caractérisé en ce qu'**au moins l'une des couronnes de soufflet (BF1, BF2) comporte au moins un élément coulissant (GL1, GL2, GL3, GL4).

5. Ressort pneumatique selon l'une des revendications 1 à 4, **caractérisé en ce que** la rainure (NUT) présente une section transversale sensiblement triangulaire.

6. Ressort pneumatique selon la revendication 5, **caractérisé en ce que** des éléments coulissants (GL3, GL4, GL5, GL6) agencés dans une partie centrale des couronnes de soufflet supérieure et/ou inférieure (BF1, BF2) sont prévus pour centrer les deux couronnes de soufflet (BF1, BF2) en cas de défaillance du ressort pneumatique, tandis que des éléments coulissants (GL1, GL2) agencés au niveau d'une partie latérale (ABS, ABS') des couronnes de soufflet supérieure et/ou inférieure sont prévus pour absorber des sollicitations verticales.

7. Ressort pneumatique selon l'une des revendications 1 à 4, **caractérisé en ce que** la rainure (NUT) présente une section transversale sensiblement trapézoïdale.

8. Ressort pneumatique selon la revendication 7, **caractérisé en ce que** des éléments coulissants (GL3, GL4, GL5, GL6) agencés dans une partie centrale des couronnes de soufflet supérieure et/ou inférieure (BF1, BF2) sont prévus pour absorber des sollicitations verticales en cas de défaillance du ressort pneumatique, tandis que des éléments coulissants (GL1, GL2) agencés au niveau d'une partie latérale (ABS, ABS') des couronnes de soufflet supérieure et/ou inférieure sont prévues pour centrer les deux couronnes de soufflet (BF1, BF2).

9. Ressort pneumatique selon l'une des revendications 1 à 8, **caractérisé en ce que** la rainure (NUT) et la contre-pièce (GGS) sont réalisées de manière sensiblement coïncidente l'une par rapport à l'autre.

10. Ressort pneumatique selon l'une des revendications 1 à 9, **caractérisé en ce que** le sommet (SCH) de la rainure (NUT) et la contre-pièce (GGS) s'étendent sensiblement le long d'un plan médian longitudinal (ε) de la couronne de soufflet (BF1, BF2) qui leur est respectivement associée.

11. Ressort pneumatique selon la revendication 4, **caractérisé en ce que** les éléments coulissants (GL1, GL2, GL3, GL4, GL5, GL6) présentent des surfaces de glissement planes.

12. Ressort pneumatique selon l'une des revendications 1 à 11, **caractérisé en ce que** la rainure (NUT) est courbée.

13. Ressort pneumatique selon la revendication 12, **caractérisé en ce que** la courbure de la rainure (NUT) est adaptée au mouvement de rotation vers l'extérieur.

14. Ressort pneumatique selon l'une des revendications 1 à 13, **caractérisé en ce que** la contre-pièce est réalisée sous forme conique.

15. Ressort pneumatique selon l'une quelconque des revendications 1 à 14, **caractérisé en ce que** la couronne de soufflet (BF1) supérieure dans un état monté comporte un raccord pneumatique (LFA) agencé de manière centrée sur celle-ci.

16. Ressort pneumatique selon la revendication 4 et selon la revendication 15, **caractérisé en ce que** les éléments coulissants (GL3, GL4, GL5, GL6) prévus pour centrer les deux couronnes de soufflet (BF1, BF2) sont chanfreinés en leurs angles (E3, E4, E5, E6) tournées vers le raccord pneumatique (LFA).

17. Véhicule sur rails (SFZ) comprenant un châssis rotatif (DRE) ou bogie et une superstructure de wagon (WAK) disposée dessus, **caractérisé en ce qu'**au moins un ressort pneumatique (LUF) selon l'une des revendications 1 à 16 est agencé entre le châssis rotatif (DRE) et la superstructure de wagon (WAK).

18. Véhicule sur rails selon la revendication 17, **caractérisé en ce que** le sommet (SCH) de la rainure (NUT) s'étend de manière sensiblement parallèle à la direction longitudinale du véhicule (L).
